# FASCICULE DE BREVET EUROPEEN

(11) **EP 1 784 059 B1**
(45) Date de publication et mention de la délivrance du brevet: **18.03.2009**
(21) Numéro de dépôt: 05360043.3
(22) Date de dépôt: 03.11.2005
(51) Int. Cl.: H05B 39/04

(54) **Procédé de mise en fonctionnement sécurisée d'un variateur de lumière**
Verfahren zum sicheren Betrieb eines Dimmers für eine Lampe
Method of securely operating a dimmer for a light

(43) Date de publication de la demande: 09.05.2007
(73) Titulaire: HAGER CONTROLS (Société par Actions Simplifiée), 67700 Saverne (FR)
(72) Inventeur: Elsass, Marc, 67140 Barr (FR); Soulet, Arnaud, 67490 Dettwiller (FR); Poisson, Christophe, 67700 Saverne (FR)
(74) Mandataire: Littolff, Denis

(56) Documents cités:
- EP-A- 0 618 667
- EP-A- 1 119 094
- FR-A- 2 756 049
- GB-A- 2 248 531

## Description

La présente invention a trait à un procédé de mise en fonctionnement sécurisée d'un variateur de lumière sur une charge quelconque placée en sortie du variateur, ainsi qu'à un dispositif de mise en oeuvre de ce procédé.

Les variateurs de lumière doivent permettre l'allumage, l'extinction ou le réglage du niveau de luminosité des charges lumineuses qui leur sont connectées : or ces charges, typiquement classées dans trois catégories selon qu'elles sont résistives, inductives ou capacitives, ne sont pas traitées de façon identique par le variateur et suscitent des problématiques différentes. Ainsi, l'étage de puissance placé en sortie de ce dernier, permettant l'alimentation variable des charges, fonctionne avec un signal de sortie découpé dans la phase selon un mode de découpage qui dépend de la nature de la charge.

Lorsqu'elle est inductive, celle-ci est alimentée selon un mode dit de conduction à l'angle qui voit la portion de chaque alternance suivant immédiatement le passage par zéro bloquée, le reste de l'alternance étant normalement transmis à la charge. Ce mode d'alimentation convient également aux charges résistives, mais provoque des surintensités lorsque des charges de nature capacitive sont placées en sortie de l'étage d'alimentation.

Les récepteurs capacitifs sont alimentés selon un mode de fonctionnement dit de coupure à l'angle, dans lequel la première portion de chaque alternance est transmise à la charge alors que le reste de l'alternance est bloquée. De fortes surtensions surviennent lorsque ce mode de fonctionnement est utilisé avec des charges inductives. A la longue, ces surtensions peuvent aboutir à la destruction du variateur.

Dans les variateurs actuels, lorsqu'ils sont conçus pour s'adapter automatiquement à la nature de la charge lors de leur mise sous tension, les procédés d'auto-configuration privilégient un démarrage en mode coupure à l'angle car il est facile de détecter les surtensions qui apparaissent lorsque les charges sont inadaptées. Le variateur est alors basculé en mode de conduction à l'angle. Ces surtensions peuvent cependant s'avérer dangereuses pour la pérennité des composants de protection statiques (varistances, diodes transil) prévus dans les variateurs, les énergies absorbées par lesdits composants pouvant être très importantes. Or, de plus en plus, l'utilisation de variateurs par exemple avec des prises commandées entraîne des changements fréquents de charge sans que l'utilisateur ne se préoccupe de leurs effets sur le variateur.

Pour réduire les risques de destruction de ces composants, et donc du variateur, et améliorer la durée de vie des lampes, un procédé de démarrage en douceur a été mis au point, qui ralentit l'allumage de la charge lumineuse et a pour objectif une réduction des phénomènes transitoires de type surtension ou surintensité. Ce procédé dit de « soft-start », basé sur l'application temporaire d'un signal découpé correspondant par exemple à la consigne minimale, diffère l'allumage des lampes d'environ une demi-seconde. L'application de ce « soft-start » lors de la mise en route ne supprime pas les surtensions, même s'il les rend a priori moins énergétiques. Les effets par définition imprévisibles de ces phénomènes transitoires peuvent cependant toujours conduire à la dissipation dans les composants statiques d'énergies parfois très intenses, et leur destruction après avoir encaissé quelques brefs pics d'énergie est toujours possible.

Surdimensionner les éléments de protection statique constitue la réponse la plus immédiate, mais elle ne résout que de manière très imparfaite le problème. Elle conduit en outre à une augmentation du coût du produit, inutile au regard de la plupart des cas d'utilisation avec des charges typiques pour lesquelles le variateur est en principe prévu, sans garantir pour autant sa pérennité de fonctionnement en l'absence de maîtrise des phénomènes transitoires.

La présente invention remédie à ce problème en ce qu'elle permet de supprimer les effets destructeurs des surtensions qui apparaissent lors du pilotage d'une charge inadaptée, que ce soit au moment de la mise en route du variateur ou suite à la déconnexion puis reconnexion d'une charge, situation qui est amenée à devenir commune suite à la généralisation de l'utilisation des variateurs sur des prises commandées.

Selon le procédé de l'invention, un « soft-start » particulier est mis en oeuvre, lors de chaque mise sous tension du variateur ou suite à une déconnexion et reconnexion de charge. Dans ces hypothèses, le variateur se met dans un état de blocage avec la sortie inactivée, et il met en oeuvre un « soft-start » lent à la prochaine utilisation, c'est-à-dire lorsqu'une consigne est à nouveau donnée au variateur. Ce fonctionnement s'applique quel que soit le type de charge disposée en aval du variateur, de manière à limiter ses effets potentiellement destructeurs si elle est temporairement inadaptée au mode de découpage (avant basculement dans le mode approprié) ou simplement à l'emploi du variateur (entraînant un blocage de celui-ci).

A cet effet, le procédé de mise en fonctionnement sécurisée d'un variateur de lumière appliqué à une charge de nature inconnue, mis en oeuvre à partir d'un état de non alimentation de l'étage de puissance du variateur, comporte les étapes suivantes :
- activation de l'alimentation de charge en mode coupure à l'angle ;
- incrémentation régulière de l'angle de coupure en l'absence de surtension, jusqu'à l'obtention de la consigne de commande de l'étage d'alimentation ;
- basculement en mode conduction à l'angle en cas d'apparition de surtension.

Un tel procédé est déjà décrit dans le document EP 1 119 094, sans précisions quant aux modalités d'application.

Selon l'invention, une détection de la présence d'une charge en sortie de l'étage d'alimentation précède l'étape d'activation de l'alimentation de ladite charge en mode coupure à l'angle, la coupure de la première alternance étant commandée après une durée comprise entre 100 µs et 1 ms, l'incrémentation de l'angle de coupure étant réalisée selon un pas de l'ordre de 100 µs.

Lorsqu'aucune charge n'est connectée au variateur, l'étape de détection de présence, qui permet par conséquent de conclure à l'absence d'une charge aux bornes du variateur, maintient la sortie de l'étage d'alimentation dans un état de blocage. Aucune demande d'allumage n'est alors prise en compte. Dès qu'une charge est détectée et qu'une demande d'allumage est initiée, la procédure de « soft-start » lent de l'invention est mise en oeuvre, qui permet de détecter d'éventuelles surtensions tout en limitant leur amplitude et l'énergie dissipée par les éléments de protection statique du variateur.

La montée en puissance jusqu'à obtention de la consigne de commande correspondant à la demande est très progressive et commence avec un premier angle de conduction d'une valeur très faible.

Selon une possibilité bien adaptée au dispositif de l'invention, la détection de présence d'une charge en sortie du variateur s'effectue par :
- mesure de la tension entre la phase et la sortie de l'étage d'alimentation lorsque celle-ci est bloquée ;
- comparaison d'au moins une fraction de cette tension avec une fraction correspondante d'une tension seuil prédéterminée inférieure à la tension secteur ;
- la présence d'une charge étant établie si ladite tension est supérieure à la tension seuil.

Comme cela sera expliqué plus en détail en référence au dispositif de mise en oeuvre du procédé de l'invention, lorsque la charge est présente, le neutre du secteur est ramené à la sortie de l'étage d'alimentation. La tension entre phase et sortie dépend alors des tensions dues aux impédances du variateur, de la charge raccordée et éventuellement du câble de raccordement. La tension seuil tient compte de ces différentes tensions. Lorsque la comparaison effectuée permet de conclure que la tension mesurée est supérieure à la tension seuil, cela signifie qu'une charge est présente aux bornes du variateur. Cette tension seuil est de préférence fixée à un niveau compris entre 50 V et 200 V crête.

Selon un exemple, la durée avant coupure de la première alternance peut être prévue de l'ordre de 400 µs, la durée des pas d'incrémentation étant ensuite de l'ordre de 100 µs.

L'obtention d'un signal correspondant à la consigne fixée par l'utilisateur est suffisamment progressive et démarre suffisamment bas pour que d'éventuels phénomènes transitoires puissent être maîtrisés dans de bonnes conditions.

Pour fonctionner efficacement, le procédé selon l'invention doit comporter une détection permanente de la déconnexion de la charge. Cette détection est nécessaire pour assurer une condition primordiale de mise en oeuvre du procédé de l'invention, à savoir son démarrage uniquement lorsque la sortie du variateur est bloquée. Lorsqu'elle aboutit au blocage de la sortie de l'étage d'alimentation, ladite détection est suivie par une vérification de la déconnexion. Si cette dernière n'est pas confirmée, l'étage d'alimentation de la charge est remis dans son mode de fonctionnement précédant la coupure, avec la consigne de commande la précédant.

L'absence de confirmation indique alors en effet une variation accidentelle du paramètre utilisé pour la détection de la déconnexion, et il convient par conséquent de refaire fonctionner le variateur dans l'état dans lequel il avait été placé.

Comme indiqué ci-dessus, l'invention concerne non seulement un procédé de mise en fonctionnement, mais encore un dispositif permettant la mise en oeuvre protégée d'un variateur de lumière, quelle que soit la charge qui lui est appliquée et les conditions de son application.

Classiquement, ce dispositif comporte en sortie l'étage de puissance mentionné, alimentant de manière variable la charge par découpage de phase, ainsi qu'une unité programmable de contrôle et de pilotage du variateur, un étage de détection des surtensions, un étage de détection du passage par zéro du courant dans la charge, et un étage de détection du passage par zéro de la tension secteur.

Selon l'invention, il se caractérise en ce qu'il comporte au surplus un étage de mesure de la tension entre la phase du secteur et la sortie de l'étage d'alimentation. Cette mesure se fait par comparaison à un seuil, et elle permet de déterminer comme on l'a vu si la tension entre phase et charge est égale à la tension secteur diminuée des tensions dues à l'impédance du variateur, à celle de la charge et, selon le cas, au câblage.

Dans une configuration préférentielle, cet étage de mesure comporte un comparateur à l'entrée duquel est appliquée la tension entre la phase et la sortie de l'étage d'alimentation, et comparant ladite tension à une valeur prédéterminée de tension seuil.

Le choix de cette valeur de tension seuil, par exemple de l'ordre de 130 V crête, permet d'être certain que, lorsque la tension mesurée excède cette valeur qui reflète la réalité d'un fonctionnement en charge, il y a nécessairement une charge aux bornes du variateur.

De préférence, la tension entre la phase et la sortie de l'étage d'alimentation est appliquée à l'entrée du comparateur via un pont de résistance fractionnant la tension réelle.

Enfin, il est à noter que l'étage de détection des surtensions et l'étage de mesure de la tension entre la phase et la sortie de l'étage d'alimentation peuvent n'être constitués que d'un seul et même circuit. Cela se justifie par le fait que dans les deux cas, le circuit correspondant met en oeuvre la même fonction.

Lorsque ledit circuit est intégré à l'unité programmable de contrôle et de pilotage du variateur, la valeur de la tension seuil Uₛ est gérée par le programme.

L'invention va à présent être décrite plus en détail, en référence aux figures, pour lesquelles :
- la figure 1 est un organigramme représentant le procédé de détection de la présence d'une charge aux bornes du variateur ;
- la figure 2 est un organigramme complet du fonctionnement d'un variateur intégrant le procédé de mise en fonctionnement sécurisée selon l'invention ; et
- la figure 3 illustre un schéma électronique d'un variateur conçu pour mettre en oeuvre le procédé de l'invention.

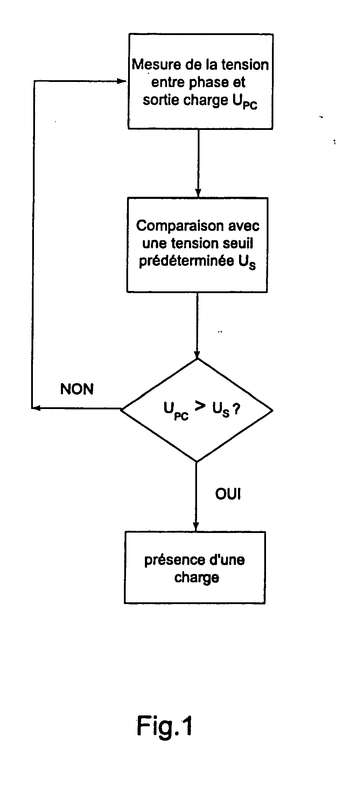

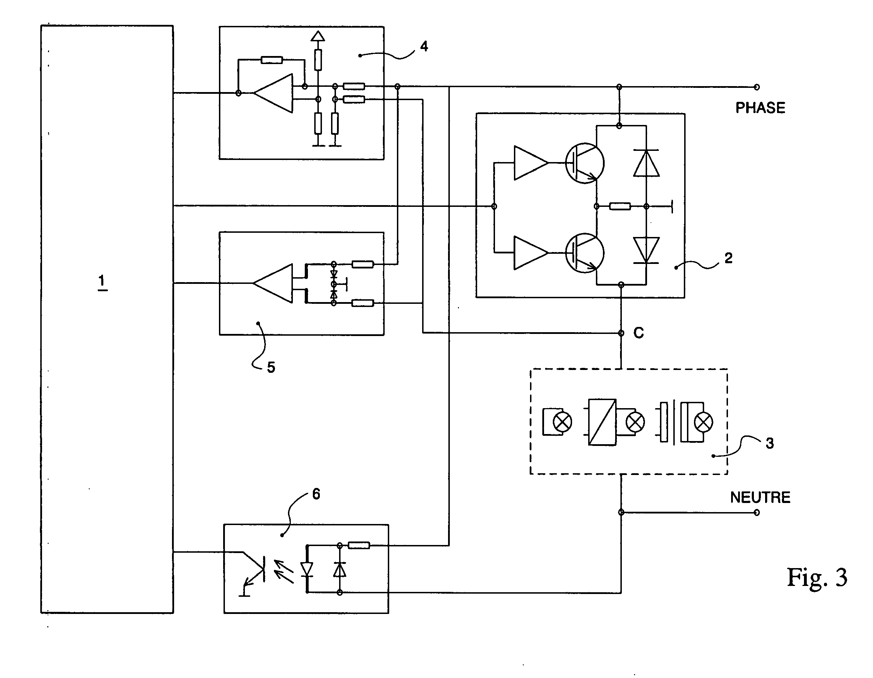

L'organigramme faisant l'objet de la figure 1 montre que lorsque la sortie charge (C) de l'étage de puissance n'est pas alimentée, le neutre s'y trouve ramené (voir figure 3) en présence d'une charge. Dans ce cas, la tension U_{pc} entre phase et le point (C) est sensiblement égale à la tension secteur. Cette tension U_{pc} est alors comparée à une tension seuil Uₛ qui est inférieure à la tension secteur, mais relativement proche d'elle en valeur. Selon une possibilité, cette tension seuil Uₛ est fixée aux alentours de 130 V crête. Si la tension U_{pc} est supérieure à la tension Uₛ, la présence d'une charge aux bornes du variateur est avérée.

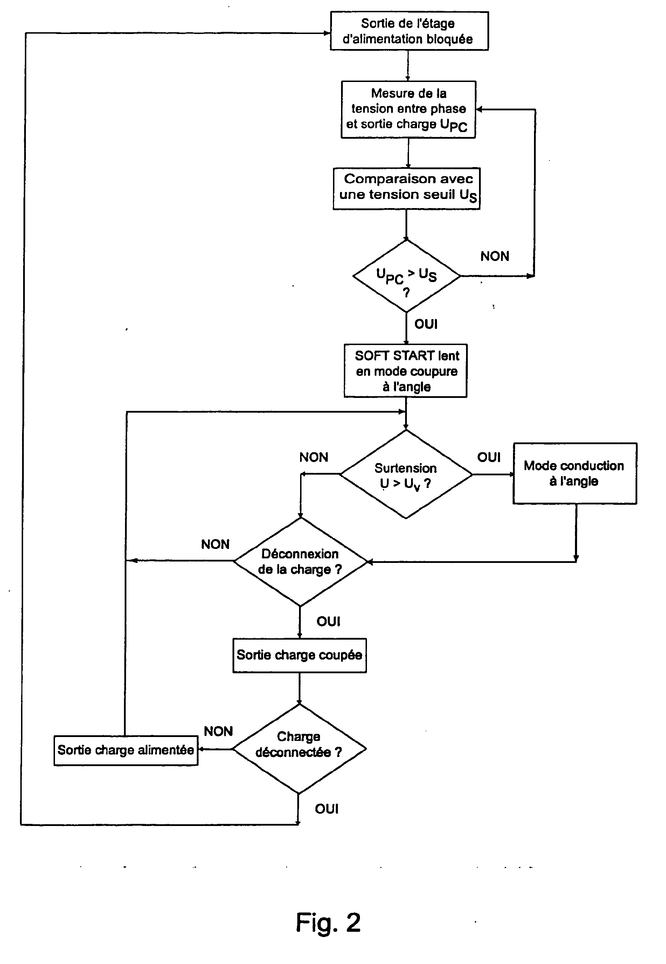

En référence à la figure 2, la condition de départ qui fonde le procédé de mise en fonctionnement sécurisé d'un variateur de lumière selon l'invention est le blocage de la sortie de l'étage d'alimentation, que ce soit lors de la mise sous tension du variateur ou à la reconnexion d'une charge. Ensuite, si une charge est détectée aux bornes du variateur, selon les modalités expliquées auparavant, la mise en place du « soft-start » lent de l'invention s'effectue toujours avec un mode de fonctionnement en coupure à l'angle, provoquant le déblocage de la sortie de l'étage d'alimentation (2).

En l'absence de surtension, qui indique que l'on a plutôt affaire à une charge capacitive ou résistive, une boucle de détection d'une déconnexion de la charge est mise en oeuvre, dont la conséquence est le blocage de la sortie si une telle déconnexion est détectée. Une vérification de la pertinence du constat est cependant systématiquement mise en oeuvre après détection de la déconnexion.

Dans l'hypothèse où le démarrage en « soft-start » lent de l'invention en mode de coupure à l'angle génère une surtension supérieure à un seuil Uᵥ, le fonctionnement est basculé en mode conduction à l'angle. Une détection de la déconnexion de la charge est mise en oeuvre en boucle. Lorsque le système détecte une déconnexion, la sortie de l'étage d'alimentation est bloquée. Une phase de vérification de la pertinence de ce constat est enfin également mise en oeuvre.

Dans tous les cas, lorsqu'une absence de charge est détectée, la sortie du variateur est maintenue dans un état de blocage, et aucune demande d'allumage n'est prise en compte.

Le dispositif chargé de mettre en oeuvre ce procédé apparaît à la figure 3. L'unité de contrôle et de pilotage (1) du variateur consiste par exemple en un microcontrôleur programmable, apte à commander l'étage de puissance (2) pour bloquer ou laisser passer le courant alimentant la charge (3). Cette unité (1) également prévue pour réaliser le traitement nécessaire à la détection de la présence de la charge (3), qui est schématiquement représenté sous ses trois aspects principaux : résistive, inductive et capacitive. Cette charge (3) est placée entre la sortie (C) de l'étage d'alimentation (2) et le neutre.

Le microcontrôleur (1) traite enfin les données issues de l'unité (4) de détection des surtensions et / ou de la tension de présence d'une charge (3), ainsi que celles qui proviennent d'unités (5, 6) de détection du passage par zéro respectivement du courant dans la charge et de la tension secteur.

L'unité (4) de détection de tension aux bornes de la charge (3) fonctionne en comparant une fraction (déterminée par un pont de résistance) de la tension U_{pc} entre la phase et la sortie (C) de l'étage d'alimentation (2) et une fraction correspondante d'une tension seuil Uₛ. Cette unité (4) peut également être intégrée à l'unité de contrôle et de pilotage (1), et permet aussi la détection de surtensions, selon le même principe de comparaison à une valeur seuil Uᵥ qui correspond à une tension crête au-delà de laquelle la surtension est dangereuse pour le variateur, par exemple fixée aux alentours de 400 V. En cas d'intégration à l'unité (1), la fixation du seuil est gérée par le programme.

L'étage de puissance (2) permettant l'alimentation de la charge est classiquement constitué de deux transistors couplés à deux diodes, lesdits transistors étant par exemple de type IGBT ou MOSFET. La consigne de blocage / déblocage de ces étages provient du microcontrôleur (1). Ce montage (2), classique en électronique de puissance, permet de procéder à un découpage de la phase selon les deux modes utilisés, respectivement la conduction à l'angle et la coupure à l'angle.

L'étage (5) de détection du passage par zéro du courant dans la charge (3) est basé sur un comparateur fonctionnant en boucle ouverte, et dont les entrées sont respectivement reliées à la phase et à la sortie charge (C).

Enfin, l'étage de détection du passage par zéro de la tension secteur consiste en un optocoupleur dont la sortie est connectée au microcontrôleur (1), le signal en sortie de l'optocoupleur reflétant le signal de phase et permettant au microcontrôleur (1) de détecter le passage par zéro de ladite phase.

## Revendications

1. Procédé de mise en fonctionnement sécurisée d'un variateur de lumière sur une charge de nature quelconque placée en sortie d'un étage de puissance (2) du variateur fournissant une alimentation variable par découpage de phase en mode soit de conduction à l'angle soit de coupure à l'angle, à partir d'un état de non alimentation en sortie de l'étage de puissance (2) pris par le variateur en l'absence de charge, comportant les étapes suivantes :
- activation de l'alimentation de ladite charge en mode coupure à l'angle ;
- incrémentation régulière de l'angle de coupure, en l'absence de surtension, jusqu'à l'obtention de la consigne de commande de l'étage d'alimentation ;
- basculement en mode conduction à l'angle en cas d'apparition de surtension.
**caractérisé en ce qu'**une détection de la présence d'une charge en sortie de l'étage d'alimentation précède l'étape d'activation de l'alimentation de ladite charge en mode coupure à l'angle, la coupure de la première alternance étant commandée après une durée comprise entre 100 µs et 100 ms, l'incrémentation de l'angle de coupure étant réalisée selon un pas de l'ordre de 100 µs.

2. Procédé de mise en fonctionnement sécurisée d'un variateur de lumière selon la revendication précédente, **caractérisé en ce que** la détection de présence d'une charge en sortie du variateur s'effectue par :
- mesure de la tension U_{pc} entre la phase et la sortie d'alimentation lorsque celle-ci est bloquée ;
- comparaison d'au moins une fraction de cette tension U_{pc} avec une fraction correspondante d'une tension seuil Uₛ prédéterminée, fixée à un niveau inférieure et proche de la tension secteur ;
- la présence d'une charge (3) étant établie si ladite tension U_{pc} est supérieure à la tension seuil Uₛ.

3. Procédé de mise en fonctionnement sécurisée d'un variateur de lumière selon la revendication précédente, **caractérisé en ce que** la tension seuil Uₛ est comprise entre 50 V et 200 V crête.

4. Procédé de mise en fonctionnement sécurisée d'un variateur de lumière selon l'une quelconque des revendications précédentes, **caractérisé en ce que** la durée avant coupure de la première alternance est de l'ordre de 400 µs, la durée des pas d'incrémentation étant de l'ordre de 100 *µ*s.

5. Procédé de mise en fonctionnement sécurisée d'un variateur de lumière selon l'une quelconque des revendications précédentes, **caractérisé en ce qu'**il comporte une détection permanente de la déconnexion de la charge (3).

6. Procédé de mise en fonctionnement sécurisée d'un variateur de lumière selon la revendication précédente, **caractérisée en ce qu'**en cas de détection de déconnexion de la charge (3), la sortie de l'étage d'alimentation (2) est coupée, et une vérification de ladite déconnexion est effectuée.

7. Procédé de mise en fonctionnement sécurisée d'un variateur de lumière selon la revendication précédente, **caractérisé en ce que,** dans l'hypothèse où la déconnexion n'est pas confirmée, l'étage d'alimentation (2) de la charge (3) est remis dans son mode de fonctionnement précédant la coupure de sa sortie (C), avec la consigne de commande précédant ladite coupure.

8. Dispositif pour la mise en oeuvre du procédé de mise en fonctionnement sécurisée d'un variateur de lumière selon l'une quelconque des revendications précédentes, comportant une unité programmable (1) de contrôle et de pilotage du variateur, commandant un étage d'alimentation (2) variable de la charge (3) par découpage de phase, un étage de détection des surtensions (4), un étage (5) de détection du passage par zéro du courant dans la charge (3) et un étage (6) de détection du passage par zéro de la tension, **caractérisé en ce qu'**il comporte un étage de mesure de la tension entre la phase du secteur et la sortie (C) de l'étage d'alimentation (2).

9. Dispositif de mise en fonctionnement sécurisée d'un variateur de lumière selon la revendication précédente, **caractérisé en ce que** l'étage de mesure (4) comporte un comparateur à l'entrée duquel est appliquée la tension U_{pc} entre la phase et la sortie (C) de l'étage d'alimentation (2), comparant ladite tension U_{pc} à une valeur de tension seuil Uₛ.

10. Dispositif de mise en fonctionnement sécurisée d'un variateur de lumière selon la revendication précédente, **caractérisé en ce que** ladite tension U_{pc} est connectée au comparateur via un pont de résistance fractionnant la tension appliquée à l'entrée du comparateur.

11. Dispositif de mise en fonctionnement sécurisée d'un variateur de lumière selon l'une des revendications 8 à 10, **caractérisé en ce que** l'étage de détection des surtensions et l'étage de mesure (4) de la tension entre la phase et la sortie (C) de l'étage d'alimentation (2) sont un seul et même circuit.

12. Dispositif de mise en fonctionnement sécurisée d'un variateur de lumière la revendication précédente, **caractérisé en ce que** ledit circuit est intégré à l'unité programmable (1) de contrôle et de pilotage du variateur, et la valeur de la tension seuil Uₛ est gérée par le programme.

## Claims

1. Method of securely operating a dimmer for a light on a load of any kind which is placed at the output of a power stage (2) of the dimmer, supplying a power supply which is variable by phase chopping in either conduction at the angle mode or cutoff at the angle mode, from a state of no power supply at the output of the power stage (2), said state being taken by the dimmer in the absence of load,
including the following steps:
- activation of the power supply of the said load in cutoff at the angle mode;
- regular incrementation of the cutoff angle, in the absence of overvoltage, until the control setting of the power supply stage is obtained;
- switching to conduction at the angle mode in the case that overvoltage appears;
**characterized in that** detection of the presence of a load at the output of the power supply stage precedes the step of activating the power supply of the said load in cutoff at the angle mode, the cutoff of the first alternation being actuated after a duration between 100 µs and 100 ms, and the cutoff angle being incremented according to a pitch of the order of 100 µs.

2. Method of securely operating a dimmer for a light according to the preceding claim, **characterized in that** the presence of a load at the output of the dimmer is detected by:
- measuring the voltage U_{pc} between the phase and the power supply output when the latter is blocked;
- comparing at least a fraction of this voltage U_{pc} with a corresponding fraction of a predetermined threshold voltage Uₛ, which is fixed at a lower level and close to the mains voltage;
- the presence of a load (3) being established if the said voltage U_{pc} is greater than the threshold voltage Uₛ .

3. Method of securely operating a dimmer for a light according to the preceding claim, **characterized in that** the threshold voltage Uₛ is between 50 V and 200 V peak.

4. Method of securely operating a dimmer for a light according to any one of the preceding claims, **characterized in that** the duration before cutoff of the first alternation is of the order of 400 µs, the duration of the incrementation pitches being of the order of 100 µs.

5. Method of securely operating a dimmer for a light according to any one of the preceding claims, **characterized in that** it includes permanent detection of the disconnection of the load (3).

6. Method of securely operating a dimmer for a light according to the preceding claim, **characterized in that** in the case of detection of the disconnection of the load (3), the output of the power supply stage (2) is cut off, and the said disconnection is verified.

7. Method of securely operating a dimmer for a light according to the preceding claim, **characterized in that,** assuming that the disconnection is not confirmed, the power supply stage (2) of the load (3) is put back into its method of operation preceding the cutoff of its output (C), with the control setting preceding said cutoff.

8. Device for implementing a method of securely operating a dimmer for a light according to any one of the preceding claims, including a programmable unit (1) for monitoring and controlling the dimmer, controlling a stage (2) for variable power supply to the load (3) by phase chopping, a stage for detecting overvoltages (4), a stage (5) for detecting current in the load (3) passing through zero, and a stage (6) for detecting the voltage passing through zero, **characterized in that** it includes a stage for measuring the voltage between the mains phase and the output (C) of the power supply stage (2).

9. Device for securely operating a dimmer for a light according to the preceding claim, **characterized in that** the measurement stage (4) includes a comparator, to the input of which the voltage U_{pc} between the phase and the output (C) of the power supply stage (2) is applied, comparing the said voltage U_{pc} to a threshold voltage value Uₛ.

10. Device for securely operating a dimmer for a light according to the preceding claim, **characterized in that** the said voltage U_{pc} is connected to the comparator via a resistance bridge, splitting the voltage which is applied to the input of the comparator.

11. Device for securely operating a dimmer for a light according to one of Claims 8 to 10, **characterized in that** the stage for detecting overvoltages and the stage (4) for measuring the voltage between the phase and the output (C) of the power supply stage (2) are one and the same circuit.

12. Device for securely operating a dimmer for a light according to the preceding claim, **characterized in that** the said circuit is integrated with the programmable unit (1) for monitoring and controlling the dimmer, and the value of the threshold voltage Uₛ is managed by the program.

## Patentansprüche

1. Verfahren zur sicheren Inbetriebnahme eines Helligkeitseinstellers an einer Last beliebiger Art, die am Ausgang einer Leistungsstufe (2) des Einstellers angeordnet ist, der eine variable Versorgung durch Phasenkappung entweder in der Phasenanschnittsteuerungs- oder in der Phasenabschnittsteuerungs-Betriebsart ausgehend von einem Nichtversorgungszustand am Ausgang der Leistungsstufe (2), den der Einsteller bei Abwesenheit einer Last annimmt, liefert,
das die folgenden Schritte umfasst:
- Aktivieren der Versorgung der Last in der Phasenabschnittsteuerungs-Betriebsart;
- regelmäßiges Inkrementieren des Kappungswinkels bei Abwesenheit einer Überspannung, bis der Steuersollwert der Versorgungsstufe erreicht ist;
- Umschalten in die Phasenanschnittsteuerungs-Betriebsart beim Auftreten einer Überspannung,
**dadurch gekennzeichnet, dass** eine Erfassung des Vorhandenseins einer Last am Ausgang der Versorgungsstufe dem Schritt des Aktivierens der Versorgung der Last in der Phasenabschnittsteuerungs-Betriebsart vorangeht, wobei die Kappung der ersten Halbwelle nach einer Dauer im Bereich von 100 µs bis 100 ms gesteuert wird, wobei das Inkrementieren des Kappungswinkels in einer Schrittweite in der Größenordnung von 100 µs ausgeführt wird.

2. Verfahren zur sicheren Inbetriebnahme eines Helligkeitseinstellers nach dem vorhergehenden Anspruch, **dadurch gekennzeichnet, dass** die Erfassung des Vorhandenseins einer Last am Ausgang des Einstellers erfolgt durch:
- Messen der Spannung U_{pc} zwischen der Phase und dem Versorgungsausgang, wenn dieser gesperrt ist; und
- Vergleichen wenigstens eines Bruchteils dieser Spannung U_{pc} mit einem entsprechenden Bruchteil einer vorgegebenen Schwellenspannung Uₛ, die auf einen Pegel unterhalb der Netzspannung und in deren Nähe festgelegt ist;
- wobei das Vorhandensein einer Last (3) bestimmt wird, falls die Spannung U_{pc} größer als die Schwellenspannung Uₛ ist.

3. Verfahren zur sicheren Inbetriebnahme eines Helligkeitseinstellers nach dem vorhergehenden Anspruch, **dadurch gekennzeichnet, dass** die Schwellenspannung Uₛ im Bereich von 50 V bis 200 V für die Spitzenspannung liegt.

4. Verfahren zur sicheren Inbetriebnahme eines Helligkeitseinstellers nach einem der vorhergehenden Ansprüche, **dadurch gekennzeichnet, dass** die Dauer vor der Kappung der ersten Halbwelle in der Größenordnung von 400 µs liegt, wobei die Dauer der Inkrementierungsschrittweiten in der Größenordnung von 100 µs liegt.

5. Verfahren zur sicheren Inbetriebnahme eines Helligkeitseinstellers nach einem der vorhergehenden Ansprüche, **dadurch gekennzeichnet, dass** es eine ständige Erfassung der Trennung von der Last (3) umfasst.

6. Verfahren zur sicheren Inbetriebnahme eines Helligkeitseinstellers nach dem vorhergehenden Anspruch, **dadurch gekennzeichnet, dass** im Fall der Erfassung einer Trennung von der Last (3) der Ausgang der Versorgungsstufe (2) unterbrochen wird und eine Überprüfung der Trennung erfolgt.

7. Verfahren zur sicheren Inbetriebnahme eines Helligkeitseinstellers nach dem vorhergehenden Anspruch, **dadurch gekennzeichnet, dass** unter der Annahme, dass die Trennung nicht bestätigt wird, die Versorgungsstufe (2) der Last (3) in ihre Betriebsart vor der Unterbrechung ihres Ausgangs (C) mit dem Steuersollwert vor der Unterbrechung zurückversetzt wird.

8. Vorrichtung für die Ausführung des Verfahrens zur sicheren Inbetriebnahme eines Helligkeitseinstellers nach einem der vorhergehenden Ansprüche, die eine programmierbare Einheit (1) für die Überwachung und die Steuerung des Einstellers umfasst, die eine Stufe (2) zur variablen Versorgung der Last (3) durch Phasenunterbrechung, eine Stufe zum Erfassen von Überspannungen (4), eine Stufe (5) zum Erfassen eines Nulldurchgangs des Stroms in der Last (3) und eine Stufe (6) zum Erfassen des Nulldurchgangs der Spannung steuert, **dadurch gekennzeichnet, dass** sie eine Stufe zum Messen der Spannung zwischen der Netzstromphase und dem Ausgang (C) der Versorgungsstufe (2) umfasst.

9. Vorrichtung zur sicheren Inbetriebnahme eines Helligkeitseinstellers nach dem vorhergehenden Anspruch, **dadurch gekennzeichnet, dass** die Messstufe (4) einen Komparator umfasst, an dessen Eingang die Spannung U_{pc} zwischen der Phase und dem Ausgang (C) der Versorgungsstufe (2) angelegt wird und der die Spannung U_{pc} mit einem Schwellenspannungswert Uₛ vergleicht.

10. Vorrichtung zur sicheren Inbetriebnahme eines Helligkeitseinstellers nach dem vorhergehenden Anspruch, **dadurch gekennzeichnet, dass** die Spannung U_{pc} an den Komparator über eine Widerstandsbrücke angeschlossen ist, die die an den Eingang des Komparators angelegte Spannung teilt.

11. Vorrichtung zur sicheren Inbetriebnahme eines Helligkeitseinstellers nach einem der Ansprüche 8 bis 10, **dadurch gekennzeichnet, dass** die Stufe zum Erfassen von Überspannungen und die Stufe (4) zum Messen der Spannung zwischen der Phase und dem Ausgang (C) der Versorgungsstufe (2) ein und dieselbe Schaltung sind.

12. Vorrichtung zur sicheren Inbetriebnahme eines Helligkeitseinstellers nach dem vorhergehenden Anspruch, **dadurch gekennzeichnet, dass** die Schaltung in die programmierbare Einheit (1) zum Überwachen und Steuern des Einstellers integriert ist und der Wert der Schwellenspannung Uₛ durch das Programm gesteuert wird.
